# EUROPÄISCHE PATENTSCHRIFT

(11) **EP 2 857 721 B1**
(45) Veröffentlichungstag und Bekanntmachung des Hinweises auf die Patenterteilung: **17.01.2018**
(21) Anmeldenummer: 14186636.8
(22) Anmeldetag: 26.09.2014
(51) Int. Cl.: F01D 11/00, F16J 15/3288

(54) **Bürstendichtungssystem zum Abdichten eines Spalts zwischen relativ zueinander bewegbaren Bauteilen einer thermischen Gasturbine**
Brush seal system for sealing a gap between components of a thermal gas turbine which can be moved relative to each other
Système de joint balai destiné à étanchéifier une fente entre des composants mobiles les uns par rapport aux autres d'une turbine à gaz thermique

(30) Priorität: 07.10.2013 DE 102013220168
(43) Veröffentlichungstag der Anmeldung: 08.04.2015
(73) Patentinhaber: MTU Aero Engines AG, 80995 München (DE)
(72) Erfinder: Klän, Stephan, 10707 Berlin (DE); Stiehler, Frank, 04924 Bad Liebenwerda (DE); Weber, Julian, 80797 München (DE); Schlemmer, Markus, 84048 Mainburg / Wambach (DE); Pröstler, Stephan, 82266 Inning a. Ammersee (DE)

(56) Entgegenhaltungen:
- EP-A1- 1 522 773
- WO-A1-2008/127244
- WO-A2-2008/112432
- DE-A1-102005 017 037
- DE-B3-102013 213 386
- US-A1- 2008 284 107

## Beschreibung

Die Erfindung betrifft ein Bürstendichtungssystem zum Abdichten eines Spalts zwischen relativ zueinander bewegbaren Bauteilen einer thermischen Gasturbine. Die Erfindung betrifft weiterhin ein Verfahren zum Herstellen eines solchen Bürstendichtungssystems sowie eine thermische Gasturbine mit einem derartigen Bürstendichtungssystem.

Aus dem Stand der Technik sind verschiedene Bürstendichtungssysteme für thermische Gasturbinen bekannt. Dabei gibt es eine Vielzahl von Anwendungsfällen, in welchen zwei relativ zueinander bewegliche Teile nicht-hermetisch gegeneinander abzudichten sind. Ein derartiger Anwendungsfall ist zum Beispiel die Abdichtung eines gasdurchströmten, ringförmigen Spalts zwischen einem Stator und einem Rotor einer Gasturbine für ein Flugzeug, Zur nicht-hermetischen Abdichtung ringförmiger Zwischenräume zwischen relativ zueinander rotierenden Baugruppen werden dabei häufig Bürstendichtungssysteme verwendet, da Bürstendichtungssysteme bei gleicher Dichtwirkung leichter und kompakter sind als Labyrinthdichtungen. Beispielsweise offenbart die US 2002/0020968 A1 unterschiedliche Bürstendichtungssysteme für Flugzeugtriebwerke. Die Bürstendichtungssysteme umfassen jeweils ein mehrteiliges Bürstendichtungsgehäuse, das die eigentliche Bürstendichtung bereichsweise aufnimmt und lagesichert. Jedes Bürstendichtungsgehäuse besteht hierzu zumindest aus einem Stützblech und einem Deckblech, die miteinander verbunden werden und zusammen zumindest einen Bürstenkopf des Bürstendichtungssystems U-förmig umgreifen und gegen ein Herausfallen aus dem Bürstendichtungsgehäuse sichern. Das Deckblech bzw. der in Strömungsrichtung stromauf liegende Bereich des zweiteiligen Bürstendichtungsgehäuses soll in erster Linie störende Strömungseinflüsse auf ein vom Bürstenkopf ab- und aus dem Bürstendichtungsgehäuse herausragendes Bürstenpaket abhalten, während das in Strömungsrichtung betrachtet stromab liegende Stützblech des Bürstendichtungsgehäuses als Stützelement dient, das ein Durchbiegen des Bürstenpakets in axialer Richtung des Flugzeugtriebwerks aufgrund der Druckdifferenz über das Bürstendichtungsgehäuse verhindern soll. Bekannt sind auch einteilige Bürstendichtungsgehäuse, die im Querschnitt ebenfalls zumindest annähernd U-förmig ausgebildet sind.

Als nachteilig an den bekannten Bürstendichtungssystemen ist allerdings der Umstand anzusehen, dass eine Reparatur des Bürstendichtungsgehäuses, beispielsweise nach einem Anstreifen am Rotor der Gasturbine, vergleichsweise aufwändig und teuer ist. Zudem kann das Bürstendichtungsgehäuse den Rotor beim Anstreifen beschädigen. Da die Gestaltung des Bürstendichtungsgehäuses aufgrund seiner Funktion als Bürstendichtungsträger und Stützelement für das Bürstenpaket aber nur sehr eingeschränkt variierbar ist, ist eine anstreiftolerantere und reparaturfreundlichere Ausgestaltung bekannter Bürstendichtungssysteme bislang nicht möglich.

Ein Bürstendichtungssystem nach dem Oberbegriff von Anspruch 1 ist zum Beispiel aus der US 2008/284107 A1 bekannt. Der Vollständigkeit halber sei zudem auch noch auf die Bürstendichtungssysteme hingewiesen, die in den Druckschriften WO 2008/112432 A2, WO 2008/127244 A1, DE 10 2005 017 037 A1, EP 1 522 773 A1 und DE 10 2013 213386 B3 offenbart sind.

Aufgabe der vorliegenden Erfindung ist es, ein Bürstendichtungssystem der eingangs genannten Art so zu verbessern, dass es eine geometrisch variablere und reparaturfreundlichere Ausgestaltung ermöglicht. Eine weitere Aufgabe der Erfindung ist es, ein Verfahren zum Herstellen eines solchen Bürstendichtungssystems sowie eine thermische Gasturbine mit einem derartigen Bürstendichtungssystem anzugeben.

Die Aufgaben werden erfindungsgemäß durch ein Bürstendichtungssystem mit den Merkmalen des Patentanspruchs 1, ein Verfahren gemäß Patentanspruch 11 zum Herstellen eines solchen Bürstendichtungssystems sowie durch eine thermische Gasturbine gemäß Patentanspruch 12 gelöst. Vorteilhafte Ausgestaltungen mit zweckmäßigen Weiterbildungen der Erfindung sind in den jeweiligen Unteransprüchen angegeben.

Ein erster Aspekt der Erfindung betrifft ein Bürstendichtungssystem zum Abdichten eines Spalts zwischen relativ zueinander bewegbaren Bauteilen einer thermischen Gasturbine. Erfindungsgemäß ist dabei vorgesehen, dass das Stützelement und das Bürstendichtungsgehäuse als separate Bauteile ausgebildet sind. Mit anderen Worten ist es im Unterschied zum Stand der Technik vorgesehen, dass das Stützelement nicht integraler Bestandteil des ein- oder mehrteiligen Bürstendichtungsgehäuses ist, sondern als separates Bauteil ausgeführt ist. Indem das Stützelement als vom Bürstendichtungsgehäuse separates Bauteil ausgebildet ist, wird eine vorteilhafte Erhöhung der Gestaltungsfreiheit des Bürstendichtungssystems erzielt, da eine dementsprechende Trennung der Funktionen "Bürstendichtungsträger", die weiterhin vom Bürstendichtungsgehäuse erfüllt wird, und "Abstützung des Bürstenpakets", die nunmehr vom separaten Stützelement übernommen wird, gegeben ist. Durch diese Trennung der Funktionsbereiche des Bürstendichtungssystems sind neben einer erhöhten geometrischen Gestaltungsfreiheit auch eine vereinfachte Herstellung sowie eine erhöhte Reparaturfreundlichkeit gegeben, da im Schadensfall, das heißt beispielsweise nach einem Anstreifen an einem Rotor, lediglich das separate Stützelement, nicht aber das die Bürstendichtung tragende Bürstendichtungsgehäuse überholt bzw. ausgetauscht werden muss. Entsprechend kann das Bürstendichtungsgehäuse wesentlich freier im Hinblick auf sein strukturmechanisches Verhalten ausgelegt werden. Ein weiterer Vorteil besteht darin, dass das erfindungsgemäße Bürstendichtungssystem besonders einfach an unterschiedliche Einsatzzwecke und Triebwerkstypen angepasst werden kann, da das gleiche Bürstendichtungsgehäuse lediglich mit unterschiedlichen Bürstendichtungen und Stützelementen kombiniert werden muss, um das Bürstendichtungssystem beispielsweise an unterschiedlich große radiale Spalte anzupassen.

In einer vorteilhaften Ausgestaltung der Erfindung ist vorgesehen, dass ein Endbereich des Stützelements näher an einem dem Bürstenkopf gegenüberliegenden Ende des Bürstenpakets angeordnet ist als ein Endbereich des Bürstendichtungsgehäuses. Hierdurch ist sichergestellt, dass bei einem etwaigen Anstreifen lediglich das näher an den Enden des Bürstenpakets liegende Stützelement, nicht aber das weiter von den Enden des Bürstenpakets entfernte Bürstendichtungsgehäuse beschädigt wird. Hierdurch sind wesentlich anstreiftolerante Designs des Bürstendichtungssystems ermöglicht, da im Schadensfall kein Ausbau des Bürstendichtungsgehäuses und der Bürstendichtung erforderlich sind.

Weitere Vorteile ergeben sich, indem das Stützelement formschlüssig und/oder stoffschlüssig am Bürstendichtungsgehäuse festgelegt ist Hierdurch ist eine besonders flexible Ausgestaltung des Bürstendichtungssystems ermöglicht.

Alternativ oder zusätzlich kann es vorgesehen sein, dass das Stützelement innerhalb und/oder außerhalb des Bürstendichtungsgehäuses angeordnet ist. Auch dies erlaubt eine konstruktiv besonders flexible Ausgestaltung des Bürstendichtungssystems.

Eine zusätzliche Erhöhung der konstruktiven Freiheit ist in weiterer Ausgestaltung der Erfindung dadurch gegeben, dass das Stützelement ringförmig und/oder ringsegmentförmig ausgebildet ist. Insbesondere eine ringsegmentförmige Ausgestaltung des Stützelements erleichtert dabei eine etwaige Reparatur besonders, da in der Regel lediglich ein beschädigtes Ringsegment, nicht aber der gesamte Ring repariert bzw. ausgetauscht werden muss. Grundsätzlich kann auch das Bürstendichtungsgehäuse bzw. das gesamte Bürstendichtungssystem segmentiert ausgebildet sein.

In einer weiteren vorteilhaften Ausgestaltung der Erfindung ist vorgesehen, dass das Stützelement aus einem anderen Material besteht als das Bürstendichtungsgehäuse und/oder eine abweichende Wandstärke als das Bürstendichtungsgehäuse aufweist. Aufgrund der freien Werkstoffwahl bzw. der unterschiedlichen Wandstärken kann das Bürstendichtungssystem besonders variabel ausgebildet und optimal an unterschiedliche Anwendungszwecke angepasst werden.

Indem das Bürstendichtungsgehäuse mehrteilig, insbesondere zweiteilig ausgebildet ist, kann die konstruktive Gestaltungsfreiheit des erfindungsgemäßen Bürstendichtungssystems zusätzlich gesteigert werden.

Die mechanischen Eigenschaften des Bürstendichtungssystems werden erfindungsgemäß weiterer dadurch verbessert, dass dieses ein Versteifungselement umfasst, welches am Bürstendichtungsgehäuse festgelegt ist.

In einer weiteren vorteilhaften Ausgestaltung der Erfindung ist vorgesehen, dass das Versteifungselement als gebogenes Metallblech ausgebildet ist und/oder dass das Versteifungselement mit dem Bürstendichtungsgehäuse vernietet ist und/oder dass zwischen dem Versteifungselement und dem Bürstendichtungsgehäuse wenigstens ein Gleitelement, insbesondere ein Gleitstein angeordnet ist. Indem das Versteifungselement als gebogenes Metallblech ausgebildet ist, kann auf konstruktiv einfache und kostengünstige Weise eine federnd nachgiebige Versteifung des Bürstendichtungsgehäuses erzielt werden. Indem das Versteifungselement mit dem Bürstendichtungsgehäuse vernietet ist, wird auf konstruktiv einfache und kostengünstige Art eine form- und/oder kraftschlüssige Verbindung zwischen dem Versteifungselement und dem Bürstendichtungsgehäuse erzielt. Durch das Anordnen eines Gleitsteins zwischen dem Versteifungselement und dem Bürstendichtungsgehäuse wird auf konstruktiv einfache Art eine Lagerstelle mit einem translatorischen Freiheitsgrad zur die Speicherzentrierung des Bürstendichtungssystems gewährleistet. Die Lagerstelle wird dabei durch das Gleitelement, insbesondere einen Gleitstein gebildet, wobei der Gleitstein im montierten Zustand des Bürstendichtungssystems in eine entsprechende Nut eingreift. Durch die Speicherzentrierung sind durch thermische Einflüsse bedingte relative Maßänderungen zwischen den koaxial angeordneten, sowie gegeneinander abzudichtenden Bauteilen - also zwischen einem Stator und einem Rotor - besser ausgleichbar. Das oder die Gleitelemente, insbesondere die Gleitsteine, können als separate Baugruppen ausgebildet sein und zum Beispiel durch Nieten mit dem Versteifungselement verbunden sein.

Erfindungsgemäß ist das Stützelement zwischen dem Bürstendichtungsgehäuse und dem Versteifungselement angeordnet. Hierdurch kann das Stützelement durch eine Art Klemmung lagegesichert werden. Zusätzlich können das Stützelement und das Versteifungselement hierbei vorteilhaft mit Hilfe eines gemeinsamen Befestigungsmittels am Bürstendichtungsgehäuse festgelegt werden. Hierdurch ist eine besonders schnelle, einfache und kostengünstige Montage und Demontage des Stützelements ermöglicht.

Ein zweiter Aspekt der Erfindung betrifft ein Verfahren zum Herstellen eines Bürstendichtungssystems zum Abdichten eines Spalts zwischen relativ zueinander bewegbaren Bauteilen einer thermischen Gasturbine. Das erfindungsgemäße Verfahren umfasst dabei zumindest die Verfahrensschritte Bereitstellen eines Bürstendichtungsgehäuses, Anordnen einer Bürstendichtung, so dass zumindest ein Bürstenkopf der Bürstendichtung im Bürstendichtungsgehäuse aufgenommen und lagegesichert wird, Bereitstellen eines separaten Stützelements und Anordnen des Stützelements am Bürstendichtungsgehäuse, so dass ein vom Bürstenkopf der Bürstendichtung abragendes Bürstenpaket durch das Stützelement gegen Durchbiegung abstützbar ist. Mit anderen Worten ist es im Unterschied zum Stand der Technik vorgesehen, dass einerseits ein Bürstendichtungsgehäuse und andererseits eine separates Stützelement bereitgestellt werden, wobei das Bürstendichtungsgehäuse als Dichtungsträger für die Bürstendichtung verwendet wird und das Stützelement als Schutz des Bürstenpakets vor einem unerwünschten Durchbiegen am Bürstendichtungsgehäuse festgelegt wird. Auf diese Weise wird eine vorteilhafte Erhöhung der Gestaltungsfreiheit des Bürstendichtungssystems erzielt, da eine Trennung der Funktionen "Bürstendichtungsträger", die vom Bürstendichtungsgehäuse erfüllt wird, und "Abstützung des Bürstenpakets", die vom separaten Stützelement übernommen wird, gegeben ist. Durch diese Trennung der Funktionsbereiche des erfindungsgemäß hergestellten Bürstendichtungssystems sind neben einer erhöhten geometrischen Gestaltungsfreiheit auch eine vereinfachte Herstellung sowie eine erhöhte Reparaturfreundlichkeit gegeben, da im Schadensfall, das heißt beispielsweise nach einem Anstreifen an einem Rotor, lediglich das separate Stützelement, nicht aber das die Bürstendichtung tragende Bürstendichtungsgehäuse überholt bzw. ausgetauscht werden muss. Entsprechend kann das Bürstendichtungsgehäuse wesentlich freier im Hinblick auf sein strukturmechanisches Verhalten ausgelegt werden. Eine Demontage des Bürstendichtungssystems kann dabei grundsätzlich in umgekehrter Reihenfolge vorgenommen werden. Ein weiterer Vorteil besteht darin, dass das erfindungsgemäße Bürstendichtungssystem besonders einfach an unterschiedliche Einsatzzwecke und Triebwerkstypen angepasst werden kann, da das Bürstendichtungsgehäuse lediglich mit unterschiedlichen Bürstendichtungen und/oder Stützelementen kombiniert werden muss, um das Bürstendichtungssystem beispielsweise an unterschiedlich große radiale Spalte anzupassen. Weitere sich ergebende Merkmale und deren Vorteile sind den Beschreibungen des ersten Erfindungsaspekts zu entnehmen, wobei vorteilhafte Ausgestaltungen des ersten Erfindungsaspekts als vorteilhafte Ausgestaltungen des zweiten Erfindungsaspekts und umgekehrt anzusehen sind.

Ein dritter Aspekt der Erfindung betrifft eine thermische Gasturbine, insbesondere ein Flugzeugtriebwerk, mit mindestens einem Bürstendichtungssystem, welches gemäß dem ersten Erfindungsaspekt ausgebildet und/oder durch ein Verfahren nach dem zweiten Erfindungsaspekt erhältlich ist. Die sich hieraus ergebenden Merkmale und deren Vorteile sind den Beschreibungen des ersten und des zweiten Erfindungsaspekts zu entnehmen, wobei vorteilhafte Ausgestaltungen des ersten und des zweiten Erfindungsaspekts als vorteilhafte Ausgestaltungen des dritten Erfindungsaspekts und umgekehrt anzusehen sind.

In einer vorteilhaften Ausgestaltung der Erfindung ist vorgesehen, dass das Bürstendichtungsgehäuse des Bürstendichtungssystems zur Abdichtung eines Spalts zwischen einem Rotor und einem Stator der Gasturbine am Stator festgelegt ist. Mit anderen Worten ist es vorgesehen dass das Bürstendichtungsgehäuse, mittelbar oder unmittelbar, an einem Stator der Gasturbine festgelegt ist, so dass die dem Bürstenkopf gegenüberliegenden Enden des Bürstenpakets auf einer zugeordneten Oberfläche des Rotors aufliegen. Dies stellt eine mechanisch besonders stabile und betriebssichere Anordnung des Bürstendichtungssystems dar.

Dabei hat es sich in weiterer Ausgestaltung als vorteilhaft gezeigt, wenn der Stator als Leitschaufel und/oder als Leitschaufelcluster und/oder als Leitschaufelkranz ausgebildet ist. Wenn der Stator in segmentierter Bauweise vorliegt, hat es sich als vorteilhaft gezeigt, wenn auch das Bürstendichtungssystem segmentiert ausgebildet ist, da hierdurch eine besonders einfache Montage und Demontage ermöglicht ist.

Weitere Merkmale der Erfindung ergeben sich aus den Ansprüchen, dem Ausführungsbeispiel sowie anhand der Zeichnungen. Die vorstehend in der Beschreibung genannten Merkmale und Merkmalskombinationen sowie die nachfolgend in dem Ausführungsbeispiel genannten Merkmale und Merkmalskombinationen sind nicht nur in der jeweils angegebenen Kombination, sondern auch in anderen Kombinationen verwendbar, ohne den Rahmen der Erfindung zu verlassen. Dabei zeigt:
- Fig. 1: in schematischer Perspektivansicht einen Schnitt durch ein erfindungsgemäßes Bürstendichtungssystem; und
- Fig. 2: eine vergrößerte schematische Ansicht des in Fig. 1 gezeigten Details II.

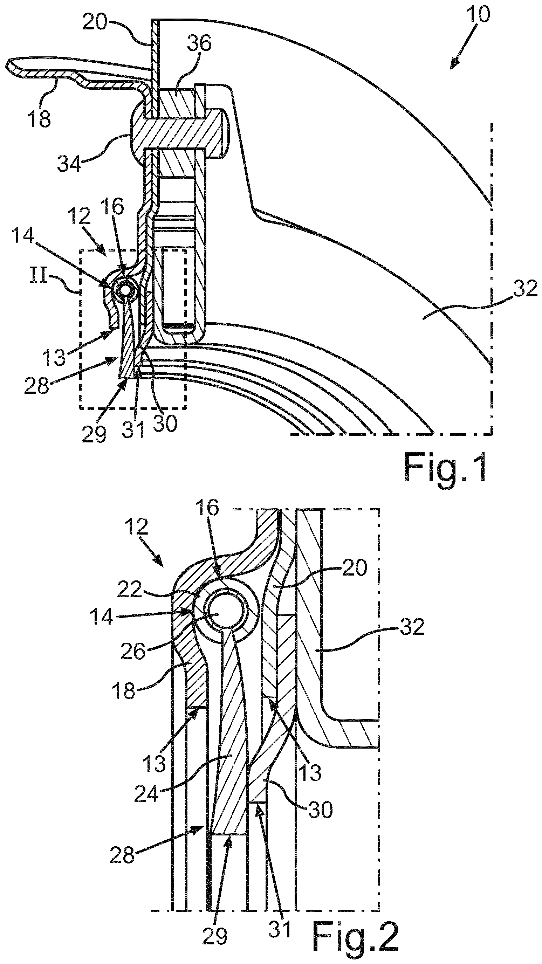

Fig. 1 zeigt in schematischer Perspektivansicht einen Schnitt durch ein erfindungsgemäßes Bürstendichtungssystem 10 und wird im Folgenden in Zusammenschau mit Fig. 2 erläutert werden, in welcher eine vergrößerte schematische Ansicht des in Fig. 1 gezeigten Details II abgebildet ist. Das Bürstendichtungssystem 10, welches vorliegend ringsegmentförmig ausgebildet ist und in an sich bekannter Weise an einem Leitschaufelcluster eines Flugzeugtriebwerks befestigt werden kann, weist ein Bürstendichtungsgehäuse 12 auf, welches einen Bürstenkopf 14 einer Bürstendichtung 16 aufnimmt und im Wesentlichen U-förmig umgreift. Das Bürstendichtungsgehäuse 12 ist dabei vorliegend zweiteilig ausgebildet und umfasst ein in Strömungsrichtung betrachtet vorderes Deckblech 18 sowie ein in Strömungsrichtung betrachtet hinteres Dichtblech 20, die zusammen im montierten Zustand einen Aufnahmeraum für die Aufnahme des Bürstenkopfs 14 bilden. Grundsätzlich kann jedoch auch vorgesehen sein, dass das Bürstendichtungsgehäuse 12 einteilig ausgebildet ist oder aus mehr als zwei Einzelkomponenten besteht. Wie man insbesondere in Fig. 2 erkennt, ist das Deckblech 18 radial unterhalb des Bürstenkopfs 14 nach innen gebogen, so dass der Bürstenkopf 14 und damit die Bürstendichtung 16 unverlierbar im Bürstendichtungsgehäuse 12 gehalten und lagegesichert ist. Alternativ oder zusätzlich kann die Bürstendichtung 16 auch zwischen dem Deckblech 18 und dem Dichtblech 20 eingeklemmt werden, um eine Lagesicherung im Bürstendichtungsgehäuse 12 zu erzielen. Grundsätzlich kann anstelle des Deckblechs 18 oder zusätzlich zum Deckblech 18 auch das Dichtblech 20 derart gebogen sein, dass der im Bürstendichtungsgehäuse 12 aufgenommene Bürstenkopf 14 lagegesichert bzw. im Bürstendichtungsgehäuse 12 festgelegt wird.

Der Bürstenkopf 14 besteht seinerseits aus einem Klemmrohr 22, mittels welchem Faser- oder Drahtbündel 24 an einem Kerndraht 26 fixiert sind. Die Faser- oder Drahtbündel 24 ragen aus dem Bürstendichtungsgehäuse 12 und bilden ein Bürstenpaket 28, dessen Endbereich 29 mit einer zugeordneten Dichtfläche eines Rotors (nicht gezeigt) in Anlage gebracht werden kann, um einen ringförmigen Spalt zwischen Stator und Rotor abzudichten.

Um das Bürstenpaket 28 gegen Durchbiegen in axialer Richtung aufgrund der während des Betriebs des zugeordneten Flugzeugtriebwerks auftretenden Druckdifferenzen zu sichern, umfasst das Bürstendichtungssystem 10 ein separat ausgebildetes Stützelement 30, mit welchem der dem Bürstenkopf 14 gegenüberliegender Endbereich 29 des Bürstenpakets 28 abgestützt werden kann. Das Stützelement 30, welches hierzu einen in Strömungsrichtung betrachtet stromauf gebogenen Endbereich 31 aufweist, an welchem das Bürstenpaket 28 anliegt, ist außerhalb des Bürstendichtungsgehäuses 12 angeordnet und zwischen dem Dichtblech 20 des Bürstendichtungsgehäuses 12 und einem Versteifungselement 32 eingeklemmt und hierdurch lagegesichert. Durch diese formschlüssige Verbindung wird ein Austausch des Stützelements 30 erleichtert. Alternativ oder zusätzlich kann das Stützelement 30, welches analog zum Bürstendichtungssystem 10 vorliegend ebenfalls ringsegmentförmig ausgebildet ist, auch stoffschlüssig mit dem Bürstendichtungsgehäuse 12 und/oder dem Versteifungselement 32 verbunden werden. Das Versteifungselement 32 ist als etwa J-förmig gebogenes Metallblech ausgebildet und über Nieten 34 mit dem Bürstendichtungsgehäuse 12, das heißt mit dem Deckblech 18 und dem Dichtblech 20 verbunden. Zwischen dem Versteifungselement 32 und dem Bürstendichtungsgehäuse 12 ist zusätzlich ein als Gleitstein ausgebildetes Gleitelement 36 angeordnet und ebenfalls mittels der Niete 34 am Bürstendichtungssystem 10 festgelegt. Das Gleitelement 36 stellt eine Lagerstelle mit einem translatorischen Freiheitsgrad zur Speicherzentrierung des Bürstendichtungssystems 10 dar. Das Gleitelement 36 greift hierzu bei der Montage in eine entsprechende Nut am Leitschaufelkranz ein. Durch die Speicherzentrierung des Bürstendichtungssystems 10 sind durch thermische Einflüsse bedingte relative Maßänderungen zwischen Stator und Rotor besser ausgleichbar. Grundsätzlich ist das erfindungsgemäße Bürstendichtungssystem 10 jedoch nicht auf diese Montageart beschränkt.

Wie man insbesondere in Fig. 2 erkennt, ist der Endbereich 31 des Stützelements 30 näher an dem dem Bürstenkopf 14 gegenüberliegenden Endbereich 29 des Bürstenpakets 28 angeordnet als ein entsprechender Endbereich 13 des Bürstendichtungsgehäuses 12, das heißt als die Enden 13 des Deckblechs 18 und des Dichtblechs 20. Hierdurch ist sichergestellt, dass im Fall eines Anstreifens am Rotor nur das Stützelement 30, nicht aber das Bürstendichtungsgehäuse 12 selbst betroffen wird. Aufgrund der separaten Ausbildung des Stützelements 30 werden eine Reparatur oder ein Austausch des Stützelements 30 nach einer Beschädigung erheblich erleichtert.

Indem das Bürstendichtungsgehäuse 12 und das Stützelement 30 als separate Bauteile ausgeführt sind, ist zudem eine vorteilhafte Trennung der Funktionalitäten "Einhausung bzw. Lagesicherung der Bürstendichtung 16" und "Abstützung des Bürstenpakets 28" gegeben. Durch diese Funktionstrennung können die Werkstoffe für das Bürstendichtungsgehäuse 12, das heißt für das Deckblech 18 und das Dichtblech 20, sowie für das separate Stützelement 30 unabhängig voneinander gewählt werden. Beispielsweise kann das Stützelement 30 aus einem weicheren Material bestehen als das Bürstendichtungsgehäuse 12, um ein anstreiftoleranteres Verhalten des Bürstendichtungssystems 10 sicherzustellen. Grundsätzlich muss das Stützelement 30 auch nicht als Blech- bzw. Metallteil ausgebildet sein, sondern kann beispielsweise aus einem keramischen Material bzw. einem keramische Faserverbundwerkstoff oder dergleichen bestehen. Weitere Vorteile der Separierung bestehen in der Erhöhung der konstruktiven und geometrischen Gestaltungsfreiheit, so dass beispielsweise unterschiedliche Wandstärken, ein unterschiedliches strukturmechanisches Verhalten im Betrieb, unterschiedliche Dichtwirkungen und dergleichen auf konstruktiv einfache und kostengünstige Art verwirklicht werden können.

## Patentansprüche

1. Bürstendichtungssystem (10) zum Abdichten eines Spalts zwischen relativ zueinander bewegbaren Bauteilen einer thermischen Gasturbine, umfassend:
- ein Bürstendichtungsgehäuse (12), welches zumindest einen Bürstenkopf (14) einer Bürstendichtung (16) zwecks Einhausung bzw. Lagesicherung der Bürstendichtung (16) aufnimmt, und
- ein Stützelement (30), mittels welchem ein vom Bürstenkopf (14) der Bürstendichtung (16) abragendes Bürstenpaket (28) gegen Durchbiegung abstützbar ist,
wobei das Stützelement (30) und das Bürstendichtungsgehäuse (12) als separate Bauteile ausgebildet sind,
**dadurch gekennzeichnet, dass** das Bürstendichtungssystem (10) ein Versteifungselement (32) umfasst, welches am Bürstendichtungsgehäuse (12) festgelegt ist,
wobei das Stützelement (30) zwischen dem Bürstendichtungsgehäuse (12) und dem Versteifungselement (32) angeordnet ist.

2. Bürstendichtungssystem (10) nach Anspruch 1, **dadurch gekennzeichnet, dass** ein Endbereich (31) des Stützelements (30) näher an einem dem Bürstenkopf (14) gegenüberliegenden Ende (29) des Bürstenpakets (28) angeordnet ist als ein Endbereich (13) des Bürstendichtungsgehäuses (12),

3. Bürstendichtungssystem (10) nach Anspruch 1 oder 2, **dadurch gekennzeichnet, dass** das Stützelement (30) formschlüssig und/oder stoffschlüssig am Bürstendichtungsgehäuse (12) festgelegt ist.

4. Bürstendichtungssystem (10) nach einem der Ansprüche 1 bis 3, **dadurch gekennzeichnet, dass** das Stützelement (30) innerhalb und/oder außerhalb des Bürstendichtungsgehäuses (12) angeordnet ist.

5. Bürstendichtungssystem (10) nach einem der Ansprüche 1 bis 4, **dadurch gekennzeichnet, dass** das Stützelement (30) ringförmig und/oder ringsegmentförmig ausgebildet ist.

6. Bürstendichtungssystem (10) nach einem der Ansprüche 1 bis 5, **dadurch gekennzeichnet, dass** das Stützelement (30) aus einem anderen Material besteht als das Bürstendichtungsgehäuse (12) und/oder eine abweichende Wandstärke als das Bürstendichtungsgehäuse (12) aufweist.

7. Bürstendichtungssystem (10) nach einem der Ansprüche 1 bis 6, **dadurch gekennzeichnet, dass** das Bürstendichtungsgehäuse (12) mehrteilig, insbesondere zweiteilig ausgebildet ist.

8. Bürstendichtungssystem (10) nach einem der Ansprüche 1 bis 7, **dadurch gekennzeichnet, dass** das Versteifungselement (32) als gebogenes Metallblech ausgebildet ist und/oder dass das Versteifungselement (32) mit dem Bürstendichtungsgehäuse (12) vernietet ist und/oder dass zwischen dem Versteifungselement (32) und dem Bürstendichtungsgehäuse (12) wenigstens ein Gleitelement (36), insbesondere ein Gleitstein angeordnet ist.

9. Verfahren zum Herstellen eines Bürstendichtungssystems (10) gemäß einem der Ansprüche 1 bis 8 zum Abdichten eines Spalts zwischen relativ zueinander bewegbaren Bauteilen einer thermischen Gasturbine, umfassend die Verfahrensschritte:
- Bereitstellen eines Bürstendichtungsgehäuses (12);
- Anordnen einer Bürstendichtung (16) im Bürstendichtungsgehäuse (12), so dass zumindest ein Bürstenkopf (14) der Bürstendichtung (16) im Bürstendichtungsgehäuse (12) aufgenommen wird;
- Bereitstellen eines separaten Stützelements (30); und
- Anordnen des Stützelements (30) am Bürstendichtungsgehäuse (12), so dass ein vom Bürstenkopf (14) der Bürstendichtung (16) abragendes Bürstenpaket (28) durch das Stützelement (30) gegen Durchbiegung abstützbar ist.

10. Thermische Gasturbine, insbesondere Flugzeugtriebwerk, mit mindestens einem Bürstendichtungssystem (10), welches gemäß einem der Ansprüche 1 bis 8 ausgebildet und/oder durch ein Verfahren nach Anspruch 9 erhältlich ist.

11. Thermische Gasturbine nach Anspruch 10, **dadurch gekennzeichnet, dass** das Bürstendichtungsgehäuse (12) des Bürstendichtungssystems (10) zur Abdichtung eines Spalts zwischen einem Rotor und einem Stator der Gasturbine am Stator festgelegt ist.

12. Thermische Gasturbine nach Anspruch 11, **dadurch gekennzeichnet, dass** der Stator als Leitschaufel und/oder als Leitschaufelcluster und/oder als Leitschaufelkranz ausgebildet ist.

## Claims

1. A brush sealing system (10) for sealing a gap between components of a thermal gas turbine that are movable relative to each other, comprising:
- a brush sealing housing (12) that receives at least one brush head (14) of a brush seal (16) in order to encase the brush seal (16) or secure its position, and
- a support element (30) by means of which a brush bundle (28) protruding from the brush head (14) of the brush seal (16) can be supported against deflection,
wherein the support element (30) and the brush sealing housing (12) are formed as separate components,
**characterised in that** the brush sealing system (10) comprises a reinforcement element (32) that is fixed to the brush sealing housing (12),
wherein the support element (30) is disposed between the brush sealing housing (12) and the reinforcement element (32).

2. The brush sealing system (10) as claimed in claim 1, **characterised in that** an end region (31) of the support element (30) is disposed closer to the end (29) of the brush bundle (28) that is opposite said brush head (14) than an end region (13) of the brush sealing housing (12) .

3. The brush sealing system (10) as claimed in claim 1 or 2, **characterised in that** the support element (30) is fixed to the brush sealing housing (12) in a form locking manner and/or in a firmly bonded manner.

4. The brush sealing system (10) as claimed in any one of claims 1 to 3, **characterised in that** the support element (30) is disposed inside and/or outside of the brush sealing housing (12).

5. The brush sealing system (10) as claimed in any one of claims 1 to 4, **characterised in that** the support element (30) is formed in the shape of a ring and/or of a ring segment.

6. The brush sealing system (10) as claimed in any one of claims 1 to 5, **characterised in that** the support element (30) is made from a different material than the brush sealing housing (12) and/or has a different wall thickness to the brush sealing housing (12).

7. The brush sealing system (10) as claimed in any one of claims 1 to 6, **characterised in that** the brush sealing housing (12) is formed to be in multiple pieces, in particular in two pieces.

8. The brush sealing system (10) as claimed in any one of claims 1 to 7, **characterised in that** the reinforcement element (32) is formed as a bent metal sheet and/or **in that** the reinforcement element (32) is riveted with the brush sealing housing (12) and/or **in that** at least one sliding element (34), in particular a sliding block, is provided between the reinforcement element (32) and the brush sealing housing (12).

9. A method for producing a brush sealing system (10) as claimed in any one of claims 1 to 8 for sealing a gap between components of a thermal gas turbine that are movable relative to each other, comprising the following method steps:
- providing a brush sealing housing (12);
- disposing a brush seal (16) in the brush sealing housing (12), so that at least one brush head (14) of the brush seal (16) is received in the brush sealing housing (12);
- providing a separate support element (30); and
- disposing the support element (30) on the brush sealing housing (12), so that a brush bundle (28) that protrudes from the brush head (14) of the brush seal (16) can be supported against deflection by the support element (30).

10. A thermal gas turbine, in particular an aircraft engine, comprising at least one brush sealing system (10) that is formed according to any one of claims 1 to 8 and/or can be obtained using a method according to claim 9.

11. The thermal gas turbine as claimed in claim 10, **characterised in that** the brush sealing housing (12) of the brush sealing system (10) is fixed to the stator for sealing a gap between a rotor and a stator of the gas turbine.

12. The thermal gas turbine as claimed in claim 11, **characterised in that** the stator is formed as a guide blade and/or a guide blade cluster and/or a guide blade ring.

## Revendications

1. Système de joint balai (10) destiné à étanchéifier une fente entre des composants mobiles les uns par rapport aux autres d'une turbine à gaz thermique, ledit système comprenant :
- un boîtier de joint balai (12) qui reçoit au moins une tête de balai (14) d'un joint balai (16) afin d'abriter ou de bloquer la position du joint balai (16), et
- un élément de support (30) au moyen duquel un paquet de balai (28) faisant saillie de la tête de balai (14) du joint balai (16) peut être supporté sans pouvoir fléchir,
dans lequel l'élément de support (30) et le boîtier de joint balai (12) sont conçus sous la forme de composants séparés,
**caractérisé en ce que** le système de joint balai (10) comprend un élément de raidissement (32) qui est fixé au boîtier de joint balai (12),
dans lequel l'élément de support (30) est disposé entre le boîtier de joint balai (12) et l'élément de raidissement (32).

2. Système de joint balai (10) selon la revendication 1, **caractérisé en ce qu'**une zone d'extrémité (31) de l'élément de support (30) est disposée plus près d'une extrémité (29), opposée à la tête de balai (14) du paquet de balai (28) qu'une zone d'extrémité (13) du boîtier de joint balai (12).

3. Système de joint balai (10) selon la revendication 1 ou 2, **caractérisé en ce que** l'élément de support (30) est fixé au boîtier de joint balai (12) par complémentarité de formes et/ou par liaison de matière.

4. Système de joint balai (10) selon l'une quelconque des revendications 1 à 3, **caractérisé en ce que** l'élément de support (30) est disposé à l'intérieur et/ou à l'extérieur du boîtier de joint balai (12).

5. Système de joint balai (10) selon l'une quelconque des revendications 1 à 4, **caractérisé en ce que** l'élément de support (30) a une forme d'anneau et/ou de segment d'anneau.

6. Système de joint balai (10) selon l'une quelconque des revendications 1 à 5, **caractérisé en ce que** l'élément de support (30) est constitué d'un matériau différent de celui du boîtier de joint balai (12) et/ou possède une épaisseur de paroi différente de celle du boîtier de joint balai (12).

7. Système de joint balai (10) selon l'une quelconque des revendications 1 à 6, **caractérisé en ce que** le boîtier de joint balai (12) est constitué de plusieurs parties, notamment de deux parties.

8. Système de joint balai (10) selon l'une quelconque des revendications 1 à 7, **caractérisé en ce que** l'élément de raidissement (32) est réalisé sous la forme d'une plaque métallique pliée et/ou **en ce que** l'élément de raidissement (32) est rivé au boîtier de joint balai (12) et/ou **en ce qu'**au moins un élément coulissant (36), en particulier un bloc coulissant, est disposé entre l'élément de raidissement (32) et le boîtier de joint balai (12).

9. Procédé de fabrication d'un système de joint balai (10) destiné à étanchéifier une fente entre des composants mobiles les uns par rapport aux autres d'une turbine à gaz thermique, le procédé comprenant les étapes visant à :
- produire un boîtier de joint balai (12) ;
- placer un joint balai (16) dans le boîtier de joint balai (12) de sorte qu'au moins une tête de balai (14) du joint balai (16) soit reçue dans le boîtier de joint balai (12) ;
- produire un élément de support séparé (30) ; et
- placer l'élément de support (30) sur le boîtier de joint balai (12) de sorte qu'un paquet de balai (28), saillant de la tête de balai (14) du joint balai (16), peut être supporté par l'élément de support (30) sans pouvoir fléchir.

10. Turbine à gaz thermique, en particulier moteur d'aéronef, comprenant au moins un système de joint balai (10) qui est conçu selon l'une quelconque des revendications 1 à 8 et/ou qui peut être obtenu par un procédé selon la revendication 9.

11. Turbine à gaz thermique selon la revendication 10, **caractérisée en ce que**, pour étanchéifier une fente entre un rotor et un stator de la turbine à gaz, le boîtier de joint balai (12) du système de joint balai (10) est fixé au stator.

12. Turbine à gaz thermique selon la revendication 11, **caractérisée en ce que** le stator est conçu comme une aube directrice et/ou comme un groupe d'aubes directrices et/ou comme une couronne d'aubes directrices.
